# DEMANDE DE BREVET EUROPEEN

(11) **EP 0 840 082 A1**
(43) Date de publication de la demande: **06.05.1998**
(21) Numéro de dépôt: 97119058.2
(22) Date de dépôt: 31.10.1997
(51) Int. Cl.: F28F 9/00, B60H 1/32

(54) **Condenseur à montage simplifié pour circuit de climatisation de véhicule**

(30) Priorité: 04.11.1996 FR 9613408
(71) Demandeur: VALEO THERMIQUE MOTEUR, 78321 La Verrière (FR)
(72) Inventeur: Paquet, André, 51390 Gueux (FR)
(74) Mandataire: Gamonal, Didier

(57) **Abrégé**

Les joues latérales servant à la fixation du condenseur sont remplacées par les tubes terminaux (11-1, 11-2) du faisceau (3), qui débouchent dans les boîtes collectrices (1, 2) au-delà des cloisons terminales (5-1, 5-2) de façon à être soustraits à la circulation du fluide caloporteur.

Les pièces particulières constituées par les joues et l'opération de mise en place de celles-ci sont supprimées.

## Description

L'invention concerne un échangeur de chaleur, plus particulièrement un condenseur pour un dispositif de climatisation de l'habitacle d'un véhicule, comprenant deux boîtes collectrices allongées dans une même direction et un faisceau comportant une rangée de tubes mutuellement parallèles et mutuellement alignés dans ladite direction, les deux extrémités des tubes pénétrant respectivement dans les deux boîtes collectrices par des ouvertures ménagées dans la paroi de celles-ci de façon à établir une communication pour un fluide caloporteur entre les deux boîtes collectrices par l'intermédiaire des tubes.

Les condenseurs ainsi constitués sont habituellement complétés par deux éléments allongés appelés joues, disposés respectivement en regard des deux extrémités de la rangée de tubes et liés mécaniquement aux extrémités des deux boîtes collectrices, par exemple par brasage, de façon à former avec celles-ci une structure rigide. Ces joues servent à porter des pattes de fixation pour la liaison mécanique du condenseur à d'autres éléments, en particulier à la structure du véhicule ou à un autre échangeur de chaleur, tel que le radiateur de refroidissement du moteur d'entraînement, lui-même fixé sur la structure du véhicule. Les joues peuvent également servir à la protection mécanique du faisceau, et notamment des intercalaires qui sont interposés, d'une part entre les tubes de la rangée, d'autre part entre chaque tube terminal et la joue correspondante, pour renforcer l'échange de chaleur entre les tubes parcourus par le fluide caloporteur et un flux d'air traversant le faisceau.

Le but de l'invention est de simplifier la structure et le montage des condenseurs connus.

L'invention vise notamment un échangeur de chaleur du genre défini en introduction, et prévoit que le tube terminal placé à l'une au moins des extrémités de la rangée, et de préférence chacun des deux tubes terminaux, est soustrait à la circulation de fluide de manière à constituer une joue propre à servir à la protection latérale du faisceau et/ou à la liaison mécanique entre l'échangeur et d'autres éléments.

Le montage de l'échangeur se réduit alors à l'assemblage mutuel, habituellement par brasage, des boîtes collectrices et du faisceau, dont tous les tubes sont sensiblement identiques et coopèrent de la même façon avec les boîtes collectrices, à l'exclusion des joues de la technique antérieure qui sont des pièces de forme particulière, coopérant avec les boîtes collectrices de manière différente des tubes.

Des caractéristiques optionnelles de l'invention, complémentaires ou alternatives, sont énoncées ci-après:
- Chaque boîte collectrice comprend une paroi tubulaire et au moins deux cloisons s'étendant transversalement à l'intérieur de celle-ci pour y délimiter au moins une chambre pour le fluide, parmi lesquelles une cloison terminale est disposée au-delà du tube terminal par rapport à l'extrémité correspondante de la boîte collectrice, de telle sorte que celui-ci débouche à l'intérieur de la paroi tubulaire hors de la ou des chambres.
- Ladite cloison terminale est interposée entre l'extrémité du tube terminal et celle du tube voisin de celui-ci dans la rangée, de telle sorte que ces deux tubes débouchent à l'intérieur de la paroi tubulaire respectivement hors de la ou des chambres et dans une chambre.
- Le tube terminal est obturé à ses deux extrémités de façon que le fluide ne puisse y pénétrer.
- Le faisceau comporte en outre des intercalaires alignés en alternance avec les tubes et propres à maintenir l'écartement mutuel de ceux-ci et/ou à renforcer l'échange de chaleur entre les tubes et un flux d'air traversant le faisceau.

Les caractéristiques et avantages de l'invention seront exposés plus en détail dans la description ci-après, en se référant aux dessins annexés, sur lesquels:
- la figure 1 est une vue en bout d'un condenseur selon l'invention; et
- la figure 2 est une vue de face de ce condenseur.

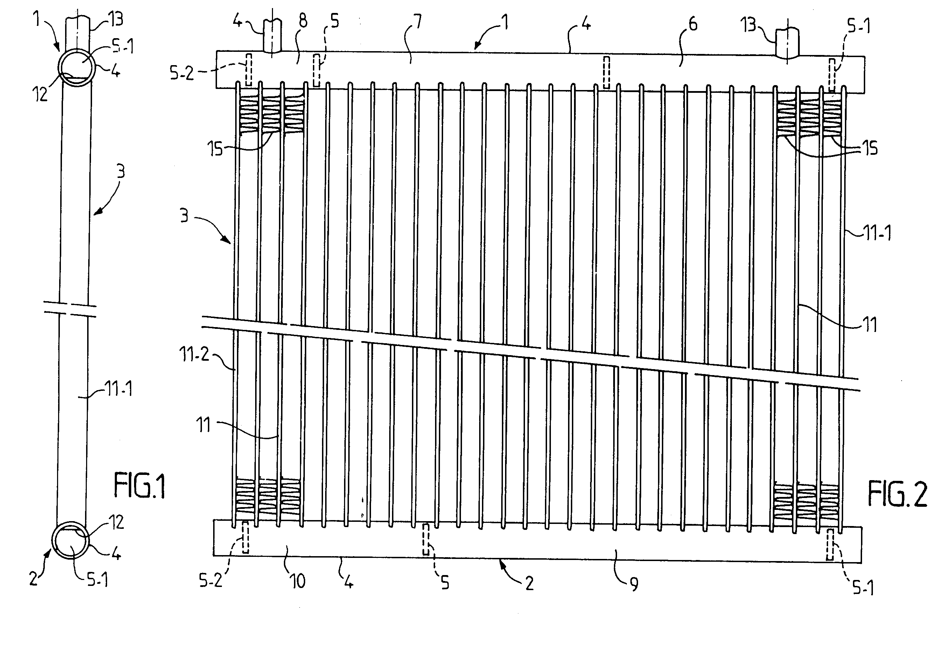

Le condenseur illustré, destiné à la circulation du fluide réfrigérant dans un dispositif de climatisation de l'habitacle d'un véhicule automobile, comprend de façon classique deux boîtes collectrices supérieure 1 et inférieure 2 entre lesquelles est interposé un faisceau de tubes 3. Les termes "supérieure" et "inférieure" se réfèrent à l'orientation du condenseur tel que représenté sur les figures. Néanmoins, il doit être entendu que le condenseur peut fonctionner dans une orientation différente. Les boîtes collectrices 1 et 2 sont disposées l'une au-dessus de l'autre, leurs axes étant horizontaux et mutuellement parallèles, et comprennent chacune une paroi tubulaire 4 de section circulaire, et des cloisons 5 s'étendant transversalement à l'intérieur de la paroi tubulaire pour y délimiter des chambres propres à recevoir le fluide réfrigérant en circulation, à savoir trois chambres 6, 7 et 8 pour la boîte collectrice supérieure 1 et deux chambres 9 et 10 pour la boîte collectrice inférieure 2, de la droite vers la gauche de la figure 2.

Le faisceau 3 comprend une multiplicité de tubes identiques 11 allongés verticalement et ayant une forme aplatie, c'est-à-dire une section transversale allongée de la gauche vers la droite de la figure 1. Les tubes sont mutuellement alignés et uniformément espacés de la gauche vers la droite de la figure 2. Chacun d'eux pénètre par ses extrémités supérieure et inférieure respectivement dans les boîtes collectrices 1 et 2, à travers des ouvertures appropriées ménagées dans les parois tubulaires 4.

Les parois tubulaires 4, les cloisons 5 et les tubes 11 sont métalliques et sont mutuellement assemblés de façon étanche au fluide par brasage, par fusion d'un matériau de brasage appliqué préalablement en revêtement sur au moins certaines parties de ces pièces.

L'ensemble des tubes 11 comprend des sous-ensembles reliant les chambres 6 et 9, les chambres 9 et 7, les chambres 7 et 10 et les chambres 10 et 8. Le fluide, pénétrant dans le condenseur par une tubulure d'entrée 13 qui débouche dans la chambre 6, parcourt donc successivement les chambres 6, 9, 7, 10 et 8, en passant à chaque fois de l'une à l'autre par les tubes de l'un des sous-ensembles précités, pour ressortir par une tubulure de sortie 14 qui communique avec la chambre 8. En circulant dans les tubes, le fluide cède de la chaleur à un flux d'air qui traverse le faisceau. L'échange de chaleur est renforcé par des intercalaires 15 garnissant les intervalles entre les tubes et en contact thermique avec ceux-ci. Ces intercalaires sont des bandes de tôle métallique courbées en forme de sinusoïde, les crêtes de la sinusoïde venant en contact alternativement avec une grande face des deux tubes adjacents à l'intercalaire.

Selon l'invention, les cloisons terminales droites 5-1 des deux boîtes collectrices sont disposées à gauche du tube terminal 11-1 du faisceau et les cloisons terminales gauches 5-2 sont disposées à droite du tube terminal 11-2. Plus précisément, chaque cloison terminale est interposée entre un tube terminal et le tube voisin de celui-ci. Il en résulte que les tubes terminaux débouchent à l'intérieur des parois tubulaires des boîtes collectrices mais à l'extérieur des chambres dans lesquelles circule le fluide. Ces tubes terminaux sont donc soustraits à la circulation du fluide et peuvent remplir les fonctions des "joues" classiques telles que rappelées plus haut.

En variante, l'invention prévoit de faire déboucher, comme à l'habitude, les tubes terminaux dans les chambres terminales des boîtes collectrices, et d'obturer les extrémités des tubes terminaux pour empêcher le fluide d'y pénétrer. Les extrémités des tubes peuvent être obturées soit en les écrasant, soit en les remplissant d'un matériau d'obturation.

## Revendications

1. Échangeur de chaleur, plus particulièrement condenseur pour un dispositif de climatisation de l'habitacle d'un véhicule, comprenant deux boîtes collectrices (1, 2) allongées dans une même direction et un faisceau (3) comportant une rangée de tubes (11) mutuellement parallèles et mutuellement alignés dans ladite direction, les deux extrémités (12) des tubes pénétrant respectivement dans les deux boîtes collectrices par des ouvertures ménagées dans la paroi de celles-ci de façon à établir une communication pour un fluide caloporteur entre les deux boîtes collectrices par l'intermédiaire des tubes, caractérisé en ce que le tube terminal (11-1, 11-2) placé à l'une au moins des extrémités de la rangée est soustrait à la circulation de fluide de manière à constituer une joue propre à servir à la protection latérale du faisceau et/ou à la liaison mécanique entre l'échangeur et d'autres éléments.

2. Échangeur de chaleur selon la revendication 1, caractérisé en ce que chaque boîte collectrice (1, 2) comprend une paroi tubulaire (4) et au moins deux cloisons (5) s'étendant transversalement à l'intérieur de celle-ci pour y délimiter au moins une chambre (6-10) pour le fluide, parmi lesquelles une cloison terminale (5-1, 5-2) est disposée au-delà du tube terminal (11-1, 11-2) par rapport à l'extrémité correspondante de la boîte collectrice, de telle sorte que celui-ci débouche à l'intérieur de la paroi tubulaire hors de la ou des chambres.

3. Échangeur de chaleur selon la revendication 2, caractérisé en ce que ladite cloison terminale est interposée entre l'extrémité du tube terminal et celle du tube (11) voisin de celui-ci dans la rangée, de telle sorte que ces deux tubes débouchent à l'intérieur de la paroi tubulaire respectivement hors de la ou des chambres et dans une chambre.

4. Échangeur de chaleur selon la revendication 1, caractérisé en ce que le tube terminal est obturé à ses deux extrémités de façon que le fluide ne puisse y pénétrer.

5. Échangeur de chaleur selon l'une des revendications précédentes, caractérisé en ce que le faisceau comporte en outre des intercalaires (15) alignés en alternance avec les tubes et propres à maintenir l'écartement mutuel de ceux-ci et/ou à renforcer l'échange de chaleur entre les tubes et un flux d'air traversant le faisceau.

6. Échangeur de chaleur selon l'une des revendications précédentes, caractérisé en ce que les deux tubes terminaux de la rangée sont soustraits à la circulation de fluide de manière à constituer des joues.
